# EUROPÄISCHE PATENTSCHRIFT

(11) **EP 3 685 483 B1**
(45) Veröffentlichungstag und Bekanntmachung des Hinweises auf die Patenterteilung: **16.11.2022**
(21) Anmeldenummer: 17822207.1
(22) Anmeldetag: 12.12.2017
(51) Int. Cl.: H02G 13/00

(54) **UNTERDRÜCKUNG VON KREISSTRÖMEN IN LEITFÄHIGEN STRUKTUREN IN GEBÄUDEN**
SUPPRESSING CIRCULATING CURRENTS IN CONDUCTIVE STRUCTURES IN BUILDINGS
SUPPRESSION DE COURANTS CIRCULANTS DANS DES STRUCTURES CONDUCTRICES DE BÂTIMENTS

(30) Priorität: 19.09.2017 DE 102017121656; 05.12.2017 DE 102017128905
(43) Veröffentlichungstag der Anmeldung: 29.07.2020
(73) Patentinhaber: DEHN SE, 92318 Neumarkt i.d. OPf. (DE)
(72) Erfinder: BROCKE, Ralph, 98693 Ilmenau/Oberpörlitz (DE); BEIERL, Ottmar, 91086 Aurachtal (DE)
(74) Vertreter: Prinz & Partner mbB
(86) Internationale Anmeldenummer: PCT/EP2017/082349
(87) Internationale Veröffentlichungsnummer: WO 2019/057319

(56) Entgegenhaltungen:
- DE-A1- 10 233 528
- DE-A1-102009 056 291
- FR-A1- 2 800 211
- US-A- 3 009 982

## Beschreibung

Die Erfindung betrifft ein Verfahren zur Auslegung von Blitzschutzsystemen für den äußeren Blitzschutz von Gebäuden und Anlagen, wobei mindestens teilweise die Blitzstromableiteinrichtung des Blitzschutzsystems als isolierter, elektrischer Leiter mit leitfähiger Schicht oder Umhüllung auf der Isolation ausgeführt ist und im jeweiligen Gebäude oder der jeweiligen Anlage leitfähige Strukturen befindlich sind, welche potentiell einer im Fall eines abzuleitenden Blitzstromes auftretenden Induktion ausgesetzt sind und diesbezüglich die leitfähige Schicht auf der isolierten Ableiteinrichtung mit der jeweiligen leitfähigen Struktur eine Sekundärschleife bildet.

Aus der DE 102 28 665 B4 ist eine Blitzstromableiteinrichtung zum elektrischen Verbinden einer Fangeinrichtung mit einer Erdungsanlage im äußeren Blitzschutz vorbekannt.

Gemäß der dortigen Lehre wird ein elektrischer Leiter für die Blitzstromableiteinrichtung eingesetzt, der in eine Isolationsumhüllung eingebettet ist, die wiederum eine leitfähige Ummantelung aufweist.

Im Anschlussabschnitt des elektrischen Leiters mit der Fangeinrichtung, zum Beispiel einer Blitzfangstange, ist eine Anordnung zur Feldsteuerung zum Zweck des Verhinderns von Gleitentladungen und zur Erhöhung der Impulsspannungsfestigkeit vorgesehen.

Die vorbekannte Lehre löst die Aufgabe, die Ableitung so auszubilden, dass der Sicherheitsabstand zu anderen leitfähigen Anlagenteilen, die es zu schützen gilt, reduziert werden kann. Darüber hinaus soll die Blitzstromableiteinrichtung neben einer hohen Stoßstromtragfähigkeit eine ausreichende Festigkeit gegenüber Gleitentladungen besitzen.

Die Feldsteuerung wird gemäß dem zitierten Stand der Technik kapazitiv oder als Ohmsche Feldsteuerung des Kabelendes ausgebildet. Diesbezüglich findet als Steuermedium der Einsatz von halbleitenden Stoffen oder halbleitenden Bändern, die aufwickelbar sind, Anwendung. Aufgrund der Anwendung der Blitzstromableiteinrichtung gemäß DE 102 28 665 B4 in Verbindung mit einer isolierten Ableitung kann der Trennungsabstand bezogen auf einen Näherungsbereich zwischen zum Beispiel einem im Inneren des Gebäudes befindlichen Kabelkanal eingehalten werden.

Bei der Weiterbildung der DE 102 28 665 B4 gemäß DE 102 33 528 B4 soll sichergestellt werden, dass transformatorische Einkopplungen des abzuleitenden Blitzstromes in einen Schirmleiter auf ein verträgliches Maß reduziert werden können.

Es hat sich gezeigt, dass die prinzipielle Möglichkeit, die Näherungsproblematik bei Blitzstromableiteinrichtungen damit zu lösen, indem bisher nicht isolierte Blitzstromableiteinrichtungen mit einer Isolierbeschichtung umgeben werden, erschwert ist durch Probleme beim Übergang der isolierten Ableitung auf die Blitzschutzanlage selbst. So treten an der Stelle des Einleitens des Blitzstromes in die Leitung entlang der Oberfläche Gleitentladungen auf. Sobald die Gleitentladungseinsatzspannung und die diesbezügliche Feldstärke überschritten wird, bilden sich stabile Entladungen aus, die die Spannungsfestigkeit insgesamt reduzieren und einen Überschlag einleiten, so dass die eigentliche Isolation wirkungslos wird. Wenn geschirmte, hochspannungsfeste, koaxiale Kabel zur Vermeidung von Gleitüberschlägen mit widerstandsgesteuerten Kabelendverschlüssen versehen werden und zum Zwecke des Blitzschutzes Verwendung finden, treten durch die gut leitfähigen Schirmleiter unerwünschte transformatorische Einkopplungen des primären, abzuleitenden Blitzstromes im Schirmleiter auf.

Dies ist problematisch, da der leitfähige Schirmleiter üblicherweise in das System metallischer Komponenten oder Strukturen des Gebäudes eingebunden wird. Bei kleinen Schleifenwiderständen mit Werten kleiner 1 Ohm treten erhebliche Ströme auf, die bis zu 50 % des primär abzuleitenden Blitzstromes betragen können.

Dieser negative Effekt stellt für die in Gebäuden installierten elektrischen oder elektronischen Anlagen und Einrichtungen eine erhebliche Bedrohung dar. Diese Bedrohung kann nur durch aufwändige Schirmung oder schwer realisierbare größere Abstände zwischen der isolierten Ableitung und den übrigen metallischen Komponenten vermieden werden. Um transformatorische Einkopplungen des abzuleitenden Blitzstromes in den Schirmleiter zu reduzieren, wird vorgeschlagen, die Isolationsumhüllung der Blitzstromableiteinrichtung mit einer leitfähigen, über die Länge einen gestuften Widerstand aufweisenden Ummantelung zu versehen. Im Anschlussabschnitt des elektrischen Leiters mit der Fangeinrichtung ist wiederum eine an sich bekannte Anordnung zur Feldsteuerung zum Zweck des Verhinderns von Gleitentladungen vorgesehen.

Es besteht also die Blitzstromableiteinrichtung gemäß DE 102 33 528 B4 aus einer koaxialen Anordnung mit einem blitzstromtragfähigen Innenleiter, einer entsprechenden Isolierung sowie einer widerstandsvariablen leitfähigen Hülle und einem äußeren mechanischen Schutzmantel.

Die leitfähige Ummantelung besitzt einen Widerstand von etwa 100 kOhm/m bezogen auf einen ersten Abschnitt. Nachfolgende, weitere Abschnitte weisen einen Widerstandswert auf, der vorzugsweise zwischen 100 kOhm/m und 1 MOhm/m verläuft.

Bevorzugt sind die Widerstandswerte von 100 kOhm/m bis 1 MOhm/m gestuft ansteigend, wobei zwischen zwei und zwanzig Abstufungen vorgesehen sind.

Die US 3 009 982 A zeigt eine Fangeinrichtung mit einem Anschlussende aus Metall und einem freien Ende, wobei die Fangeinrichtung einen isolierenden Kern besitzt, dessen Widerstand vom Anschlussende zum freien Ende hin zunimmt.

Aus der DE 10 2009 056 291 A1 ist eine isolierte Blitzschutzanlage bekannt, bestehend aus Fangleitungen aus elektrisch leitfähigem Material, die mit Abstand von einer Fläche eines Bauwerks angeordnet und mittels rohrförmigen oder stangenförmigen Isolatoren gehalten sind. Die Isolatoren weisen eine elektrisch schwach leitende Oberfläche auf, die insbesondere einen Widerstandswert von 1 bis 10 kΩ/m hat.

Die FR 2 800 211 A1 offenbart eine Fangeinrichtung mit einer Fangspitze, einer Auslösevorrichtung und einen Varistor. Aufgrund des Varistors ist der elektrische Widerstand der Fangeinrichtung abhängig vom auftretenden Strom, sodass im Fall eines Blitzeinschlags der elektrische Widerstand abgesenkt wird.

Blitzschutzsystemen mit isolierten Blitzstromableiteinrichtungen kommt zusammenfassend die Aufgabe zu, neben dem sicheren Ableiten der Blitzstromströme sicherzustellen, dass keine Teilblitzströme im zu schützenden Gebäude oder der zu schützenden Anlage fließen.

Diesbezüglich muss also das Blitzschutzsystem isoliert von der leitfähigen Struktur im zu schützenden Gebäude oder der zu schützenden Anlage realisiert werden.

Darüber hinaus ist dafür Sorge zu tragen, dass der Strom, der sich in einer Leiterschleife, bestehend aus blitzstromdurchflossener Ableitung und leitfähiger Struktur im Gebäude aufgrund der Induktionswirkung ausbilden kann, auf unkritische Werte begrenzbar ist.

Dies gelingt gemäß dem bekannten Stand der Technik durch Einhaltung eines ausreichenden Trennungsabstandes in Luft oder das Vorsehen geeigneter Isoliermaterialien, zum Beispiel auf der Basis von glasfaserverstärkten Stäben, die das entsprechende Isolationsvermögen sicherstellen.

Wie bereits ausgeführt können Blitzschutzsysteme mit isolierten Ableitungen ausgeführt werden, wobei hier die Möglichkeit besteht, die Trennungsabstände zu reduzieren. Eine diesbezügliche Herausforderung besteht in der Beherrschung der oben erwähnten Gleitüberschläge entlang der Oberfläche der isolierten Ableitung, wobei diesbezüglich zur Beherrschung dieser Gleitüberschläge eine Steuerung des elektrischen Potentials entlang der Oberfläche der Ableitung notwendig ist.

Versieht man die isolierte Ableitung mit einer leitfähigen Schicht, wie aus dem Stand der Technik bekannt, lassen sich Gleitüberschläge sicher beherrschen.

Diese leitfähige Schicht auf der isolierten Ableitung bildet jedoch zusammen mit der leitfähigen Struktur im zu schützenden Gebäude eine Sekundärschleife. Diese Sekundärschleife wird vom Magnetfeld des in der isolierten Ableitung fließenden Blitzstromes durchdrungen. Hierbei werden sehr hohe Schleifenspannungen im Bereich von mehreren 100 kV induziert.

Diese hohen auftretenden Ströme in der leitfähigen Struktur im jeweils zu schützenden Gebäude, Objekt oder Anlage können zu erheblichen Schäden bzw. zur Beeinträchtigung der Funktionsfähigkeit entsprechender Anlagen führen. Bei der bisherigen Auslegung entsprechender Blitzschutzanlagen wurde entweder vorsorglich der Trennungsabstand vergrößert, was jedoch Nachteile beim Errichten der Anlage sowie bei der sich oftmals ergebenden negativen architektonischen Wirkung in sich birgt. In der überwiegenden Anzahl aller Installationsfälle wurde jedoch bisher wenig Augenmerk auf diese kritischen Belastungen in den Sekundärkreisen gelegt.

Darüber hinaus besteht ein zu lösender Widerspruch in Folgendem.

Grundsätzlich könnte die isolierte Ableitung mit einer möglichst niederohmigen Schicht umhüllt werden, um das erwähnte Gleitüberschlagsrisiko zu minimieren, da bei einer niederohmigen Umhüllung die auftretende Spannungsbelastung gleichmäßig und unabhängig von äußeren Einflüssen entlang der gesamten Ableitung aufgeteilt wird.

Andererseits entsteht aufgrund der niedrigen Impedanz der Sekundärschleife ein Kreisstrom, dessen Größenordnung mit den Teilblitzströmen vergleichbar ist, die es eigentlich zu vermeiden gilt. Die Impulsform des induzierten Kreisstromes in der Sekundärschleife erfolgt im niederohmigen Fall proportional dem zeitlichen Verlauf des abzuleitenden Blitzstromes. Das Bedrohungspotential ist damit identisch mit dem des zu vermeidenden Teilblitzstromes.

Wird hingegen die äußere Umhüllung hochohmig ausgeführt, wie dies beispielsweise im Stand der Technik nach DE 102 33 528 B4 vorgeschlagen ist, bleibt das Gleitüberschlagsrisiko hoch, da die auftretende Spannungsbelastung ungleichmäßig, den äußeren Einflüssen folgend im Hinblick auf eine kapazitive Kopplung zur Gebäudestruktur entlang der gesamten Ableitung aufgeteilt wird.

Es entsteht zwar aufgrund der sich dann ergebenden hohen Impedanz der Sekundärschleife nur ein minimaler Kreisstrom, dessen Größenordnung geringer ist und der in seinem zeitlichen Verlauf mathematisch der ersten Ableitung des abzuleitenden Blitzstromes in der isolierten Ableitung folgt und der insofern nicht mit den Teilblitzströmen vergleichbar ist, die es zu vermeiden gilt. Jedoch müssen im Falle hoher Impedanzen auf spezielle Maßnahmen zur Feldsteuerung zurückgegriffen werden, die im eingangs erwähnten Stand der Technik geschildert sind.

Aus dem Vorgenannten ist es daher Aufgabe der Erfindung, ein Verfahren sowie eine isolierte Ableitung zur Auslegung von Blitzschutzsystemen für den äußeren Blitzschutz in Gebäuden und Anlagen anzugeben, welches einerseits das Risiko unzulässiger Ströme in sich ergebenden Sekundärschleifen reduziert und wobei andererseits sichergestellt ist, dass auch bei einem längeren Betrieb entsprechender Blitzschutzanlagen unter allen sich ergebenden Umwelt- und sonstigen Einflüssen Gleitentladungen entlang bzw. auf der isolierten Ableitung vermeidbar sind.

Die Lösung der Aufgabe der Erfindung erfolgt durch ein Verfahren nach Anspruch 1.

Die Erfindung löst das eingangs geschilderte Problem dadurch, dass große Schleifenströme im Sekundärkreis dadurch vermieden werden, indem im Schleifenpfad hochspannungsfeste, schwachleitende Segmente zur Begrenzung des Schleifenstromes eingebracht bzw. eingesetzt werden.

Diese schwachleitenden Segmente sind darüber hinaus so bemessen und ausgelegt, dass Gleitüberschläge sicher verhindert werden.

Die Auslegung der Segmente erfolgt in der Art, dass der sich ergebende Schleifenstrom nicht mehr proportional dem Blitzstromverlauf ist, sondern in guter Näherung der ersten zeitlichen Ableitung des Blitzstromes folgt.

Mit der erfindungsgemäßen Lösung erfolgt eine Minimierung des Gleitüberschlagrisikos sowie eine Minimierung der energetischen Belastung aller in der Sekundärschleife befindlichen Komponenten. Ein weiteres Bemessungskriterium bei der Auslegung der Segmente ist eine Minimierung der energetischen Belastung dieser.

Bei dem erfindungsgemäßen Verfahren zur Auslegung von Blitzschutzsystemen für den äußeren Blitzschutz von Gebäuden, Objekten und/oder Anlagen ist die eingesetzte Blitzstromableiteinrichtung mindestens teilweise als isolierter, elektrischer Leiter mit leitfähiger Schicht oder Umhüllung auf der Isolation ausgeführt und es sind im jeweiligen Gebäude oder der jeweiligen zu schützenden Anlage leitfähige Strukturen befindlich, welche potentiell einer im Fall eines abzuleitenden Blitzstromes auftretenden Induktion ausgesetzt sind, wobei diesbezüglich die leitfähige Schicht auf der isolierten Ableiteinrichtung mit der jeweiligen leitfähigen Struktur eine Sekundärschleife bildet. Gemäß dem erfindungsgemäßen Verfahren erfolgt zunächst eine Analyse der räumlichen Lage der leitfähigen Strukturen im Gebäude oder der jeweiligen zu schützenden Anlage und die Ermittlung möglicher Sekundärschleifen.

Diese Ermittlung kann anhand vorhandener Unterlagen über das jeweilige Gebäude oder die Anlage oder aber auch in Verbindung mit einer Ortsbegehung vorgenommen werden. Ist zum Beispiel ein Gebäude noch nicht vollständig mit den später zu nutzenden Anlagen oder Einrichtungen ausgestattet, kann die vorgenannte Ermittlung unter Berücksichtigung der vorhandenen metallischen Komponenten im oder am Gebäude erfolgen, wobei bei der weiteren Auslegung des Blitzschutzsystems auch unter Beachtung der elektromagnetischen Verträglichkeit grundsätzlich auf eine Minimierung von Sekundärkreisströmen abgestellt wird, um das entsprechende Gebäude auch zur Aufstellung und Nutzung von hochempfindlichen elektronischen und elektrotechnischen Anlagen nutzen zu können.

Bei der praktischen Umsetzung des erfindungsgemäßen Verfahrens kann bezogen auf bestimmte typische Industriehallen und Industriegebäude auf abgespeicherte Erfahrungswerte und bauphysikalische Angaben zurückgegriffen werden.

In einen nächsten Schritt erfolgt die Bestimmung kritischer Abstände der vorgesehenen anzubringenden isolierten Ableiteinrichtung des Blitzschutzsystems und Abschätzung der Induktionswirkung in der oder den jeweiligen Sekundärschleifen, ausgehend von Normblitz-Stoßstromgrößen für den Bereich der kritischen, nicht durch Erhöhung des Trennungsabstandes änderbaren, Abstände unter Berücksichtigung der Gesamtlänge der isolierten Ableiteinrichtung und des sich hieraus ergebenden Gesamtverschiebestroms.

Im Nachgang erfolgt ein Vergleich des abgeschätzten, induktionsbedingten möglichen maximalen Kreisstromes in der jeweils betrachteten Sekundärschleife mit einem vertretbaren Grenzwert. Die entsprechenden Grenzwerte können als Standardgrenzwerte im Vorfeld im Rahmen von Untersuchungen in Hochspannungsprüflaboren in Verbindung mit bekannten Simulationsverfahren bestimmt werden.

Im Anschluss wird die isolierte Ableitung im Falle eines zu erwartenden Überschreitens des Grenzwertes abgeändert, indem gezielt mindestens längenabschnittsweise eine Erhöhung des Widerstandswertes der leitfähigen, auf der Isolation der Ableitung aufgebrachten Schicht erfolgt, wobei die obere Grenze der Widerstandserhöhung von der Gleitentladungseinsatzfeldstärke im jeweiligen widerstandswertemäßig geänderten Abschnitt vorgegeben ist.

Die vorerwähnte Abänderung der isolierten Ableitung im Falle einer zu erwartenden Überschreitung des Grenzwertes ist auch so zu verstehen, dass aus einer vorgehaltenen Menge von ausgeführten isolierten Ableitungen mit bestimmten Eigenschaften hinsichtlich des Widerstandswertes der Umhüllung diejenige Ableitung ausgebildet wird, welche für den betreffenden Einsatzfall sich als optimal erweist.

Alternativ besteht dann die Möglichkeit, vor Ort bzw. im Vorfeld der Auslieferung der Ableitung bezogen auf den Einsatzfall die isolierte Ableitung aus mehreren Ableitungsabschnitten mit unterschiedlichen Widerstandswerten individuell zusammenzustellen.

Erfindungsgemäß wird die leitfähige Schicht der isolierten Ableitung über ihre gesamte Einsatzlänge hochohmig ausgebildet, wobei der Widerstandswert im Bereich zwischen 0,5 bis 10 kOhm/m liegt bzw. diesen Wert nicht überschreitet.

In einer Weiterbildung der Erfindung ist die leitfähige Schicht oder Umhüllung der isolierten Ableitung längenabschnittsweise durch ein gleitentladungsfreies, hochspannungsfestes Segment unterbrochen.

Ebenso besteht die Möglichkeit, die leitfähige Schicht oder Umhüllung der isolierten Ableitung an einem oder mehreren Längenabschnitten mit eingebetteten, hochspannungsfesten, gleitentladungsfreien Widerstandsbereichen zu versehen.

Erfindungsgemäß ist darüber hinaus die verfahrensgemäß gebildete isolierte Ableiteinrichtung für den äußeren Blitzschutz.

Mittels des vorgestellten Verfahrens kann eine Blitzstromableiteinrichtung für den äußeren Blitzschutz mit einem elektrischen Leiter erhalten werden, welche in eine Isolationsumhüllung eingebettet ist, wobei die Isolationsumhüllung mit einer leitfähigen Ummantelung versehen ist. Hierbei weist die leitfähige Ummantelung mindestens längenabschnittsweise einen erhöhten Widerstandswert auf, wobei der untere Bereich des Widerstandswertes Kreisströme in elektrischen Sekundärkreisen zu schützender Gebäude, Objekte oder Anlagen auf unkritische Scheitelwerte bei angenommenen Blitzströmen begrenzt und hierbei der Oberbereich des Widerstandswertes das Erreichen oder Überschreiten von Gleitentladungseinsatzfeldstärken sicher vermeidet.

Der erhöhte Widerstandswert liegt im Bereich zwischen 0,5 kOhm/m bis 1 kOhm/m.

Der erhöhte Widerstandswert kann so bemessen sein, dass der Strom i2 im jeweiligen Sekundärkreis 0,1 bis 1 % des Stromes i1 beträgt, welcher im Primärkreis, das heißt im Blitzstromfall durch die Ableiteinrichtung fließt.

Die Erfindung soll nachstehend anhand eines Ausführungsbeispieles sowie unter Zuhilfenahme von Figuren näher erläutert werden.

Hierbei zeigen:
Fig. 1 eine prinzipielle Darstellung der Induktionswirkung in einer Sekundärschleife aus leitfähiger Struktur im zu schützenden Gebäude und üblicher niederohmiger Umhüllung einer isolierten Ableitung gemäß dem Stand der Technik; und
Fig. 2 die Wirkung einer erfindungsgemäßen Begrenzung des induzierten Stromes in der Sekundärschleife durch den Einsatz eines hochspannungsfesten, gleitentladungsfreien erfindungsgemäß bemessenen Widerstandes R.

Der in der Sekundärschleife induzierte Kreisstrom i2 wird von den Einflussgrößen Amplitude und zeitlicher Verlauf des abzuleitenden Blitzstromes, Geometrie der Sekundärschleife und dem Widerstand der erfindungsgemäß geänderten Bereiche oder Segmente der leitfähigen Umhüllung bestimmt.

Das Risiko eines Gleitüberschlages an der Oberfläche isolierter Ableitungen wird ebenfalls von der Amplitude und dem zeitlichen Verlauf des abzuleitenden Blitzstromes und dem Widerstand der zu bemessenen Segmente aber auch äußeren Einflüssen entlang der Ableitung, insbesondere auch von in der Nähe befindlichen leitfähigen Komponenten definiert.

Da die Amplitude, der zeitliche Verlauf des Blitzstromes, die Geometrie der Sekundärschleife aber auch die äußeren Einflüsse entlang einer Ableitung nicht oder nur bedingt beeinflussbar sind und isolierte Ableitungen an sich universell einsetzbar sein sollen, wird erfindungsgemäß zur Lösung der gestellten Aufgabe auf die Auslegung und Bemessung von Widerstandswerten abgestellt, die sich mindestens längenabschnittsweise bezogen auf die isolierte Ableitung im Bereich der äußeren, leitfähigen Umhüllung erstrecken.

Eine beispielhafte Bemessung des Widerstandsbelages bzw. der Ausbildung des entsprechenden Längenabschnittes soll nachstehend erläutert werden.

Aus einer Vielzahl von Untersuchungen und Messungen ist es bekannt, dass bei einer blitzstromrelevanten Spannungsänderungsgeschwindigkeit von du/dt = 3 MV/µs an einer isolierten Ableitung mit einem Kapazitätsbelag von C = 100 pF/m je Meter Lauflänge ein kapazitiver Verschiebestrom von ca. 300 A wirksam wird.

Bei einer angenommenen Gesamtlänge der isolierten Ableitung von beispielsweise 10 m und angenommener linear abnehmender Spannungsverteilung entlang des Innenleiters der isolierten Ableitung ergibt sich ein Gesamtverschiebestrom von 1500 A.

Wird eine Gleitentladungsfeldstärke von beispielsweise E_{GE} = 20 kV/cm angenommen, ergibt sich der Widerstand der isolierten Ableitung im relevanten Abschnitt bzw. über die Gesamtlänge von ca. 1,33 kOhm/m als nach Möglichkeit nicht zu überschreitender Maximalwert.

Bei einer derartigen beispielhaften Auslegung ergibt sich ein Kreisstrom in der Sekundärschleife mit einem Scheitelwert von ca. 180 A und einer Impulsdauer von 250 ns bei einem angenommenen Blitzstrom der Blitzschutzklasse I (negativer Folgeblitz mit 200 kA/µs und einer der Norm zugrundeliegenden Koppelinduktivität von 1,2 µH/m).

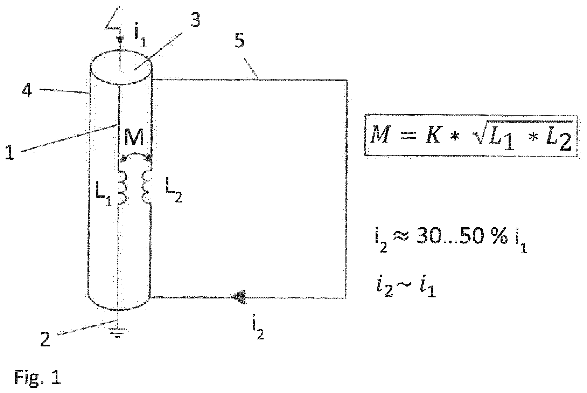

Mit der Darstellung nach Figur 1 ist ein beispielhafter Abschnitt eines Blitzschutzsystems für den äußeren Blitzschutz gezeigt, wobei eine Blitzstromableiteinrichtung vorgesehen ist, die im Falle eines Blitzschlages den Blitzstrom i1 über einen elektrischen Leiter 1 zu einem Erder 2 ableitet.

Je nach Ausführungsform der entsprechend ausgerüsteten Blitzschutzanlage weist der Primärkreis eine Induktivität L₁ auf.

Die eingesetzte isolierte Blitzschutzableiteinrichtung weist auf der Isolation 3 eine leitfähige Schicht oder Ummantelung 4 auf.

Diese leitfähige Schicht bildet mit einer leitfähigen Struktur 5 im zu schützenden Gebäude (nicht dargestellt) eine Sekundärschleife. Diese Sekundärschleife weist die Induktivität L₂ auf. Je nach räumlicher Zuordnung ergibt sich eine magnetische Kopplung M.

Ohne die erfindungsgemäßen Maßnahmen kann der in der Sekundärschleife induzierte Strom i2 zwischen 30 und 50 % oder mehr des Stromes i1 betragen mit der Folge negativer Auswirkungen auf die leitfähige Struktur selbst oder an oder in der Nähe dieser Struktur befindlicher elektronischer oder elektrotechnischer Komponenten.

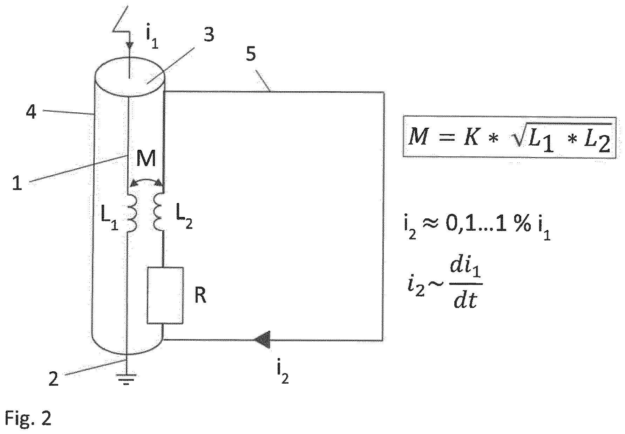

Eine Begrenzung des induzierten Stromes i2 in der Sekundärschleife geschieht unter Rückgriff auf eine Lösung, wie sie in der Figur 2 symbolhaft dargestellt wird.

Diesbezüglich erfolgt eine gezielte, mindestens längenabschnittsweise ausgeführte Erhöhung des Widerstandswertes R der leitfähigen, auf der Isolation der Ableitung aufgebrachten Schicht 4.

Die obere Grenze dieser Widerstandserhöhung wird von der Gleitentladungseinsatzfeldstärke im jeweiligen widerstandsmäßig geänderten Abschnitt vorgegeben.

Bei der erfindungsgemäßen Auslegung der entsprechenden Blitzstromableiteinrichtung liegt der Kreisstrom in der Sekundärschleife i2 bei etwa 0,1 bis 1 % des Stromes i1.

Der Strom i2 ergibt sich annähernd aus di1/dt.

## Patentansprüche

1. Verfahren zur Auslegung von Blitzschutzsystemen für den äußeren Blitzschutz von Gebäuden und Anlagen,
wobei mindestens teilweise die Blitzstromableiteinrichtung des Blitzschutzsystems als isolierter, elektrischer Leiter mit leitfähiger Schicht oder Umhüllung der Isolation ausgeführt ist und
im jeweiligen Gebäude oder der jeweiligen Anlage leitfähige Strukturen befindlich sind, welche potentiell einer im Fall eines abzuleitenden Blitzstromes auftretenden Induktion ausgesetzt sind und diesbezüglich die leitfähige Schicht auf der isolierten Ableiteinrichtung mit der jeweiligen leitfähigen Struktur eine Sekundärschleife bildet, mit folgenden Schritten:
- Analyse der räumlichen Lage der leitfähigen Strukturen im Gebäude oder der jeweiligen zu schützenden Anlage und Ermittlung möglicher Sekundärschleifen;
- Bestimmung kritischer Abstände der isolierten Ableiteinrichtung und Abschätzung der Induktionswirkung in der Sekundärschleife, ausgehend von Normblitz-Stoßstromgrößen für den Bereich der kritischen, nicht durch Erhöhung des Trennungsabstandes änderbaren Abstände unter Berücksichtigung der Gesamtlänge der isolierten Ableiteinrichtung und des sich hieraus ergebenden Gesamtverschiebestromes;
- Vergleich des abgeschätzten, induktionsbedingten möglichen maximalen Kreisstromes in der Sekundärschleife mit einem vertretbaren Grenzwert;
- Abänderung der isolierten Ableitung im Falle einer zu erwartenden Überschreitung des Grenzwertes gemäß auf den Einsatzfall optimierter Auslegung und Bemessung des Widerstandswertes durch gezielte Erhöhung des Widerstandswertes der leitfähigen, auf der Isolation der Ableitung aufgebrachten Schicht oder Umhüllung,
wobei die obere Grenze der Widerstandserhöhung von der Gleitentladungseinsatzfeldstärke im jeweiligen widerstandswertemäßig geänderten Abschnitt vorgegeben wird,
wobei der widerstandswertemäßig geänderte Abschnitt ein schwachleitendes Segment ist und die Auslegung des schwachleitenden Segments in der Art erfolgt, dass der sich ergebende Strom in der Sekundärschleife der ersten zeitlichen Ableitung des Blitzstromes folgt, und
wobei die leitfähige Schicht der isolierten Ableitung über ihre gesamte Einsatzlänge hochohmig ist, jedoch ein Wert von 0,5 bis 10 kOhm/m nicht überschritten wird.

2. Verfahren nach Anspruch 1, **dadurch gekennzeichnet, dass** die leitfähige Schicht oder Umhüllung der isolierten Ableitung längenabschnittsweise durch ein gleitentladungsfreies, hochspannungsfestes Widerstandssegment unterbrochen ist.

3. Verfahren nach einem der vorangegangen Ansprüche, **dadurch gekennzeichnet, dass** die leitfähige Schicht oder Umhüllung der isolierten Ableitung an einem oder mehreren Längenabschnitten eingebettete hochspannungsfeste, gleitentladungsfreie Widerstandsbereich aufweist.

## Claims

1. A method of designing lightning protection systems for the exterior lightning protection of buildings and installations,
wherein the lightning current arresting device of the lightning protection system is at least in part configured as an insulated electrical conductor having a conductive layer or casing of the insulation, and
located in the respective building or the respective installation are conductive structures which are potentially exposed to an induction occurring in the event of a lightning current to be arrested and, in this regard, the conductive layer on the insulated arresting device forms a secondary loop with the respective conductive structure, comprising the following steps:
- analyzing the spatial position of the conductive structures in the building or the respective installation to be protected and identifying possible secondary loops;
- determining critical distances of the insulated arresting device and estimating the induction effect in the secondary loop based on standard lightning surge current variables for the range of the critical distances which cannot be changed by increasing the separation distance, taking into account the total length of the insulated arresting device and the total displacement current resulting therefrom;
- comparing the evaluated induction-related possible maximum circulating current in the secondary loop to an acceptable limit value;
- modifying the insulated arresting line in case an exceeding of the limit value is to be expected, in accordance with a design optimized for the case of application and dimensioning of the resistance value by selectively increasing the resistance value of the conductive layer or casing applied to the insulation of the arresting line,
wherein the upper limit of the resistance increase is predefined by the sliding discharge operating field strength in the respective section that has been modified in terms of resistance value,
wherein the section that has been modified in terms of resistance value is a low conductivity segment and the design of the low conductivity segment is performed such that the resulting current in the secondary loop follows the first time derivative of the lightning current, and
wherein the conductive layer of the insulated arresting line is of high impedance over its entire operating length, but a value of 0.5 to 10 kOhm/m is not exceeded.

2. The method according to claim 1, **characterized in that** the conductive layer or casing of the insulated arresting line is interrupted in longitudinal sections by a high-voltage resistant resistance segment that is free from sliding discharges.

3. The method according to any of the preceding claims, **characterized in that** the conductive layer or casing of the insulated arresting line has, at one or more longitudinal sections, embedded high-voltage resistant resistance areas that are free from sliding discharges.

## Revendications

1. Procédé de conception de systèmes de protection contre la foudre pour la protection extérieure de bâtiments et d'installations contre la foudre,
le moyen de dérivation de courant de foudre du système de protection contre la foudre étant au moins partiellement réalisé sous forme de conducteur électrique isolé présentant une couche ou une enveloppe conductrice de l'isolation, et
des structures conductrices se trouvant dans le bâtiment respectif ou l'installation respective, lesquelles sont potentiellement soumises à une induction survenant dans le cas d'un courant de foudre à dériver, et la couche conductrice sur le moyen de dérivation isolé formant à cet égard avec la structure conductrice respective une boucle secondaire, comprenant les étapes suivantes :
- analyse de la position dans l'espace des structures conductrices dans le bâtiment ou l'installation respective à protéger, et détermination de boucles secondaires possibles ;
- détermination de distances critiques du moyen de dérivation isolé, et estimation de l'effet d'induction dans la boucle secondaire sur la base de grandeurs de courant de choc de foudre normalisée pour la plage des distances critiques non modifiables par augmentation de la distance de séparation, en tenant compte de la longueur totale du moyen de dérivation isolé et du courant de déplacement total qui en résulte ;
- comparaison du courant circulaire possible maximal estimé, dû à l'induction, dans la boucle secondaire avec une valeur limite acceptable ;
- modification de la dérivation isolée dans le cas d'un dépassement prévisible de la valeur limite selon la conception et le dimensionnement optimisés pour le cas d'utilisation, de la valeur de la résistance par augmentation ciblée de la valeur de la résistance de la couche ou de l'enveloppe conductrice appliquée sur l'isolation de la dérivation,
la limite supérieure de l'augmentation de la résistance étant déterminée par l'intensité de champ initiale de décharge glissante dans la partie respective à valeur de résistance modifiée,
la partie à valeur de résistance modifiée étant un segment à faible conductivité, et la conception du segment à faible conductivité étant réalisée de telle sorte que le courant résultant dans la boucle secondaire suit la première dérivation temporelle du courant de foudre, et
la couche conductrice de la dérivation isolée étant de valeur ohmique élevée sur toute sa longueur d'application, une valeur de 0,5 à 10 kohm/m n'étant cependant pas dépassée.

2. Procédé selon la revendication 1, **caractérisé en ce que** la couche ou l'enveloppe conductrice de la dérivation isolée est interrompue par tronçons longitudinaux par un segment de résistance résistant à la haute tension et exempt de décharge glissante.

3. Procédé selon l'une des revendications précédentes, **caractérisé en ce que** la couche ou l'enveloppe conductrice de la dérivation isolée présente, sur un ou plusieurs tronçons longitudinaux, des zones de résistance noyées exemptes de décharge glissante et résistantes à la haute tension.
